# EUROPEAN PATENT SPECIFICATION

(11) **EP 4 023 475 B1**
(45) Date of publication and mention of the grant of the patent: **19.04.2023**
(21) Application number: 21218071.5
(22) Date of filing: 29.12.2021
(51) Int. Cl.: B60K 6/20, B60K 6/46, B60W 10/06, B60W 10/08, B60W 10/26, B60W 20/15, B60W 30/18, B60W 30/188

(54) **CONTROL SYSTEM AND CONTROL METHOD OF A SERIES HYBRID VEHICLE**
STEUERUNGSSYSTEM UND STEUERUNGSVERFAHREN FÜR EIN SERIENHYBRIDFAHRZEUG
SYSTÈME DE COMMANDE ET PROCÉDÉ DE COMMANDE D'UN VÉHICULE HYBRIDE EN SÉRIE

(30) Priority: 30.12.2020 IT 202000032846
(43) Date of publication of application: 06.07.2022
(73) Proprietor: Texa S.p.A., 31050 Monastier di Treviso (IT)
(72) Inventor: VIANELLO, Bruno, 31050 MONASTIER DI TREVISO (TV) (IT)
(74) Representative: Zamprogno, Bruno

(56) References cited:
- EP-A1- 3 725 616
- DE-A1-102010 040 137
- DE-A1-102017 125 948
- GB-A- 2 342 631
- US-A1- 2020 391 742

## Description

### TECHNICAL FIELD

The invention relates to a control system and a control method of a series hybrid vehicle.

### BACKGROUND ART

As it is known, "hybrid" cars are basically divided into two groups depending on the type of use of the internal combustion engine: parallel hybrid cars and series hybrid (range extender) cars.

A parallel hybrid car is basically provided with one or more electric motors, which transmit the motion to the wheels in parallel to the motion transmitted by the internal combustion engine.

In series hybrid cars there is no transmission of the motion to the wheels by the internal combustion engine, which, on the contrary, merely operates an electric generator to produce the energy needed for the operation of the electric drive system.

Documents US2020/0391742 and EP3725616, DE102010040137, DE102017125948, GB2342631 describe a method and a device to control a series hybrid vehicle.

Driving these series hybrid cars can sometimes be boring, since the absence of an internal combustion engine mechanically connected to the wheels of the car deprives drivers of those driving feelings that are typical of an internal combustion engine vehicle.

This drawback is even more significant when dealing with sports cars.

### DESCRIPTION OF THE INVENTION

The object of the invention is to provide a system and a method to control a series hybrid vehicle, which allows the driver of the series hybrid vehicle to enjoy those driving feelings that are typical of an internal combustion engine vehicle.

In particular, it is an object of the invention to provide, while driving a series hybrid vehicle, a sound effect and traction dynamics that are typical of an internal combustion engine vehicle provided with a mechanical transmission with a manual or robotic or automatic gearbox.

The appended claims describe preferred embodiments of the invention and form an integral part of the description.

Thanks to the invention, the driver of the series hybrid vehicle can be provided with driving feelings that are typical of an internal combustion engine vehicle having a plurality of gear ratios, enjoying at the same time the multiple benefits arising from an electric drive system.

In particular, the control system is capable of simulating the sound effect and the traction dynamics of an internal combustion engine vehicle with a robotic or manual or automatic gearbox.

In other words, through the user command assembly it is possible, on the one hand, to control the electric drive of the series hybrid vehicle and, on the other hand, to control the torque of the internal combustion engine (and, hence, its number of revolutions/minute) in a synchronized manner, generating the same feeling, in terms of sound effect and traction dynamics, that would be generated if there were a robotic or manual gearbox interposed between an internal combustion and the wheels of a vehicle.

The direct control of the internal combustion engine of the series hybrid vehicle in response to the actuation of the user command assembly, associated with the simultaneous control of the electric traction power transmitted to the electric motor, has the technical effect of synchronizing the sound effect directly generated by the internal combustion engine with the dynamics of the vehicle, namely with its electric drive. This produces, for the driver and/or for people observing the series hybrid vehicle, acoustics and dynamic sensations that are similar to the ones generated by a vehicle exclusively provided with an internal combustion engine combined with a robotic or manual or automatic gearbox.

### BRIEF DESCRIPTION OF THE DRAWINGS

The invention will now be described with reference to the accompanying drawings showing a non-limiting embodiment thereof, wherein:
- Figure 1 is a schematic view of a series hybrid vehicle provided with the control system according to the invention; and
- Figure 2 is a block diagram of the control system of a series hybrid vehicle according to the invention.

### PREFERRED EMBODIMENTS OF THE INVENTION

The invention will now be described in detail with reference to the accompanying Figures, so as to allow a person skilled in the art to carry it out and use it. Possible changes to the embodiments described herein will immediately be evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

A preferred embodiment of the invention will be described and discussed below.

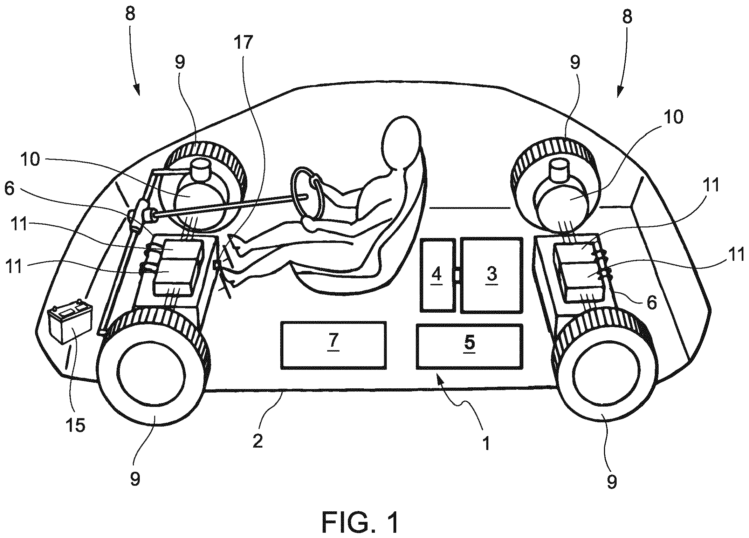

With reference to Figure 1, reference number 1 indicates, as a whole, a control system for a series hybrid vehicle 2 comprising: an internal combustion engine 3, an electric generator 4, a vehicle control unit 5, at least one battery assembly 6 and an energy management unit 7.

Furthermore, the series hybrid vehicle 2 can preferably comprise a front electric axle 8 and a rear electric axle 8. Each electric axle 8 comprises two drive wheels 9 connected to respective electric motors 10. The electric motors 10 can comprise, for example, polyphase induction motors or synchronous motors with permanent magnets or the like.

Obviously, the invention is not limited to the use of four electric motors 10 for the independent control of the four wheels 9 (as shown in the accompanying Figures), but it can comprise other embodiments (not shown herein) entailing, for example, the use of an electric motor 10, which transfers the motion to the two wheels 9 of the relative electric axle 8, for example, preferably, by means of a differential. Furthermore, the invention is not limited to the use of two electric axles 8, but it can involve the use of one single electric axle 8, which can be arranged in a front position or in a rear position.

The control system 1 comprises, for each electric motor 10, a DC/AC electronic power converter 11 (namely, an "inverter"), which is electrically connected to the energy management unit 7 and to the relative electric motor 10.

The electronic power converter 11 is configured to have the electric motor 10 operate in a motor condition, in which the electric motor 10 absorbs electrical power and generates a mechanical torque transmitted to the wheels 9 of the series hybrid vehicle 2, or in a generator condition, in which the electric motor 10 absorbs mechanical energy and generates electrical power during a deceleration or braking of the series hybrid vehicle 2.

Preferably, the electronic power converter 11 is selectively suited to: receive an electrical supply power PA (preferably, in the form of direct voltage and direct current) from the energy management unit 7, when the relative electric motor 10 operates in the motor condition; provide the electric motor 10 with an electrical traction power PT, namely an alternating polyphase power, to adjust the traction torque (and, hence, the speed); and provide the energy management unit 7 with an electrical motor power PM generated by the electric motor 10, when the electric motor 10 operates in the generator condition.

As far as the internal combustion engine 3 is concerned, it is mechanically connected to the electric generator 4 so as to generate an electrical power, hereinafter referred to as generated electrical power PG. The internal combustion engine 3 has the exclusive aim of operating the electric generator 4 to generate the generated electrical power PG and, therefore, has no mechanical connection to the wheels 9 for the transmission of its motion to them.

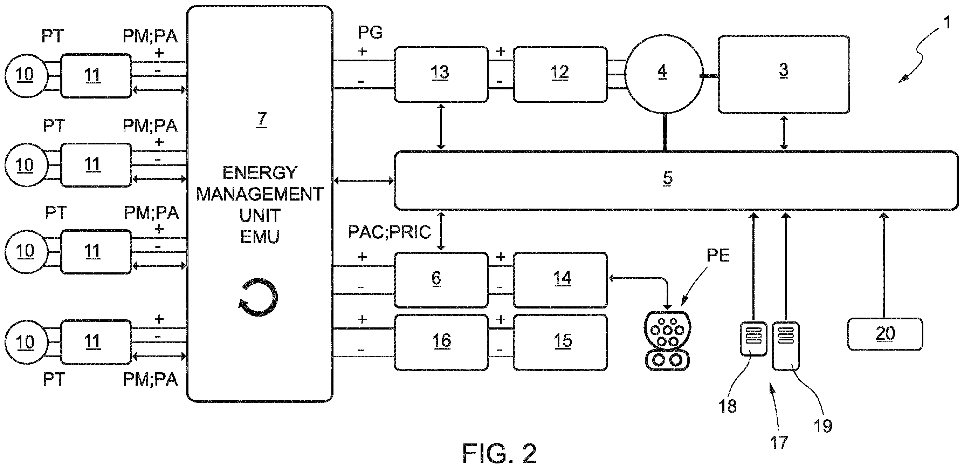

As far as the electric generator 4 is concerned, it can comprise, for example, a polyphase electric generator structured to generate a polyphase alternating generated electrical power PG (with alternating current and voltage). The electric generator 4 is electrically connected to the energy management unit 7, preferably by means of a synchronous rectifier stage 12 (Figure 2) and of a regulator stage 13 (Figure 2), which are designed to rectify and regulate, respectively, the three-phase alternating electrical power PG generated by the electric generator 4 so as to supply said generated electrical power PG in a predetermined manner, in terms of voltage/current, to the energy management unit 7.

As far as the battery assembly 6 is concerned, it can be provided with one or more chemical batteries or batteries of another type, such as for example the so-called supercaps (not shown) having a high capacity of storing electrical energy, and is designed to provide an electrical storage power PAC. The battery assembly 6 can be connected to the energy management unit 7 and can also be charged through a connection to an electrical network (not shown), for example by means of an electrical socket PE (Figure 2), through a power charging system of the series hybrid vehicle 2.

The vehicle power charging system can be provided, for example, with a power supply device 14 (Figure 2), which is mounted on board the series hybrid vehicle 2 (on-board charger) and is designed to receive electrical power from the electrical socket PE and supply it to the battery assembly 6.

The battery assembly 6 is further configured to supply, in a predetermined manner, the electrical storage power PAC to the energy management unit 7 or, alternatively, to receive, from the energy management unit 7, an electrical charging power PRIC used to electrically charge the battery assembly 6.

The series hybrid vehicle 2 can further be provided with a low-voltage and low-power electric system (not shown), which can have a nominal voltage of 12 Volts. The low-voltage electric system can be designed to supply power to electronic control circuits and to electronic auxiliary circuits and is provided with a storage device 15 (namely, a chemical battery of its own), which is preferably designed to receive electrical energy from the energy management unit 7 through a DC-DC electronic power converter 16 (Figure 2).

With reference to Figures 1 and 2, the control system 1 further comprises a user command assembly 17 configured to allow a user to give one or more vehicle commands to the series hybrid vehicle 2. The user command assembly 17 comprises an acceleration command member 18, which is designed to provide an acceleration command given by the driver of the series hybrid vehicle 2. The acceleration command member 18 can comprise an accelerator pedal or an acceleration command lever and at least one sensor device (not shown), which detects the angular position of the accelerator pedal or the pressure exerted upon the accelerator pedal and gives the acceleration command to the vehicle control unit 5. The acceleration command can be given through data/signals indicative, for example, of the degree of opening of and/or of the pressure exerted upon the accelerator pedal.

The user command assembly 17 further comprises a braking command member 19, which is designed to provide a braking command given by the driver of the series hybrid vehicle 2. The braking command member 19 can comprise a brake pedal or a brake command lever and at least one sensor device (not shown), which detects the angular position of the brake pedal or the pressure exerted upon the brake pedal and gives the braking command both to the hydraulic or electric system of the braking system (not shown in the accompanying Figures) of the series hybrid vehicle 2 and to the vehicle control unit 5. The braking command can be given through data/signals indicative, for example, of the degree of opening of and/or of the pressure exerted upon the brake pedal.

With reference to Figure 2, the control system 1 further comprises a speed sensor 20, which is configured to detect a running speed of the series hybrid vehicle 2.

According to a non-limiting embodiment of the invention, the speed sensor 20 is configured to detect the rotation speed of the wheels 9 of the series hybrid vehicle 2 and to determine the running speed of the series hybrid vehicle 2.

According to the invention, the vehicle control unit 5 is configured to:
control the torque of the internal combustion engine 3 as a function of the actuation of the user command assembly 17 of and the detected running speed so as to generate a sound effect comparable to the sound effect of an internal combustion engine vehicle provided with a mechanical transmission having a plurality of gears, and
control, through said energy management unit 7, the electrical traction power PT supplied to the electric motor 10 as a function of the actuation of the user command assembly 17 and of the detected running speed, so as to generate traction dynamics comparable to the traction dynamics of an internal combustion engine vehicle provided with a mechanical transmission having a plurality of gears.

In particular, said generated sound effect and said generated traction dynamics are comparable to the sound effect and the traction dynamics of an internal combustion engine vehicle provided with a mechanical transmission having a robotic or manual or automatic gearbox.

Furthermore, the vehicle control unit 5 is configured to control the electric generator 4 so as to provide an adjustable contrasting torque to counteract the torque of the internal combustion engine 3 so as to generate a sound effect comparable to the sound effect of a gear shift.

Basically, the vehicle control unit 5 is configured to control the torque of the electric motors 10 in response at least to the acceleration command given by the acceleration command member 18 and, simultaneously, the current of the generator 4 so as to provide a contrasting torque counteracting the internal combustion engine 3 in order to simulate the strain to which the internal combustion engine 3 would have been subjected through the use of a proper gear of the transmission, in given circumstances, as if the series hybrid vehicle 2 would be operated by a mechanical system consisting of an internal combustion engine, a robotic or manual gearbox and a transmission to the drive wheels.

More in detail, the vehicle control unit 5 is configured to control the torque of the internal combustion engine 3 and, hence, its number of revolutions/minute in a synchronized manner with the acceleration command given by the driver through the acceleration command member 18.

The vehicle control unit 5 is configured to control the generation of generated electrical power PG through the electric generator 4. More in detail the contrasting torque imparted by the generator 4 to the internal combustion engine 3, hence its strain, is transformed into generated electrical power PG, which, in a predetermined manner, through the control of the vehicle control unit 5, is distributed - through the energy management unit 7, both to the battery assembly 6 and directly to the electric motors 10.

According to the invention, the vehicle control unit 5 is configured to adjust, through the energy management unit 7, the electrical traction power PT supplied to the electric motor 10 so as to simulate the traction dynamics of a gear shift.

In particular, the vehicle control unit 5 is configured to control the torque of the internal combustion engine 3 as a function of the electrical traction power PT supplied to the electric motor 10, so as to synchronize the number of revolutions of the internal combustion engine 3 with the electrical traction power PT supplied to the electric motor 10, depending on the particular driving dynamics.

In particular, the vehicle control unit 5 is configured to cooperate with the energy management unit 7 so as to control the electrical traction power PT supplied to the electric motors 10 as a function of the electrical storage power PAC and of the generated electrical power PG available as input to the energy management unit 7.

Basically, in order to fulfil the acceleration command given by the acceleration command member 18, the energy management unit 7, in a way that is predetermined by the vehicle control unit 5, uses, in order to provide the electrical traction powers PT, the electrical storage power PAC available as input and, in addition, also the generated electrical power PG.

By way of example, in case, in a condition of substantially still-standing vehicle, the driver gives an acceleration command that requires the maximum acceleration (maximum pressing of the accelerator pedal), the energy management unit 7, through the supervision of the vehicle control unit 5, basically uses the electrical storage power PAC to distribute it to the electric motors 10, since the generator 4 requires a low value of contrasting torque counteracting the internal combustion engine 3 (first gear), in order to allow the internal combustion engine 3 to quickly reach its maximum rpm, like when there is a sudden acceleration when the vehicle is standing still, so as to be subsequently braked by a greater torque and, hence, by a higher current generation on the part of the generator 4, which is suited to simulate the second gear.

This operating configuration is also repeated for the following gears, until the series hybrid vehicle 2 reaches its maximum speed, at which the electrical traction power PT is the sum of the generated electrical power PG and of the available electric storage power PAC.

In particular, the electric generator 4 is configured to generate an additional generated electrical power PG to be used by the energy management unit 7 in addition to the electrical storage power PAC in phases of great acceleration of the series hybrid vehicle 2.

Obviously, in case of slowing down and/or braking of the series hybrid vehicle 2, in response to the commands given through the braking command member 19, the energy management unit 7 can manage, in a way that is predetermined by the vehicle control unit 5, the electrical motor power PM generated by each electric motor 10 in the generator condition to charge the battery assembly 6.

In use and with reference to a first operating condition, the energy management unit 7 supplies, in a way that is predetermined by the vehicle control unit 5, the electrical supply power PA to the electronic power converters 11 using the electrical storage power PAC available from the battery assembly 6 as a function of the requested power to be supplied to the electric motors 10.

In a second operating condition, the energy management unit 7 supplies, in a way that is predetermined by the vehicle control unit 5, the electrical supply power PA to the electronic power converters 11 using the electrical storage power PAC available from the battery assembly 6 and, in addition, also the additional electrical power PG generated by the electric generator 4, as a function of the requested power to be supplied to the electric motors 10.

In a third operating condition, the control system 5 determines a reference torque to be imparted to each one of the electric motors 10 in order to control the series hybrid vehicle 2 as a function of the acceleration command given by the user; estimates/determines the total electrical supply power PA to be supplied to the electronic power converters 11 based on the determined reference torque; and determines the generated electrical power PG to be generated by the electric generator 4, in a way that is established and synchronized with the movement of the acceleration command member 18 operated by the driver and with the movement of the series hybrid vehicle 2, in order to provide the same effect that would be provided by an internal combustion engine vehicle provided with a robotic or manual transmission interposed between the internal combustion engine and the wheels.

In a fourth operating condition, the vehicle control unit 5 controls the energy management unit 7 in energy generating mode with a low consumption of the internal combustion engine 3. In this operating condition, the vehicle control unit 5 keeps the internal combustion engine 3 in a constant torque and revolution condition and the internal combustion engine 3, in combination with the electric generator 4, generates, in its maximum efficiency curve, both the generated electrical power PG to power the electric motors 10 and the electrical storage power PAC to charge the battery assembly 6.

In a fifth operating condition, the vehicle control unit 5 controls the energy management unit 7 in a condition of lack of production of generated electrical power PG for the electric motors 10. In this operating condition, it is possible to keep the series hybrid vehicle 2 completely still and to use the internal combustion engine 3, which, in combination with the electric generator 4, generates the sole electrical storage power PAC to charge the battery assembly 6.

In a sixth operating condition, the vehicle control unit 5 controls the energy management unit 7 in a condition of lack of production of generated electrical power PG for the electric motors 10 and of lack of production of electrical storage power PAC to charge the battery assembly 6. In this operating condition, it is possible to keep the series hybrid vehicle 2 completely still and to use the acceleration command member 18 to operate the internal combustion engine 3 in a loadless manner, simulating the operating condition of an internal combustion engine vehicle standing still in neutral, and without producing any electrical storage power PAC to charge the battery assembly 6.

In a seventh operating condition, by operating a selection device, which is not shown in the accompanying Figures, and by holding the brake command member 19 pressed, the vehicle control unit 5 controls the energy management unit 7 in the maximum power condition in order to carry out a quick start. In this operating condition, the series hybrid vehicle 2, at first, is kept still while the internal combustion engine 3 is brought to its maximum power and, in combination with the electric generator 4, produces the electrical storage power PAC to ensure the maximum supply of charging power to the battery assembly 6. Subsequently, by releasing the pressure exerted upon the braking command member 19, the energy management unit 7 supplies, in a way that is predetermined by the vehicle control unit 5, the electrical supply power PA to the electronic power converters 11 using the entire electrical storage power PAC available from the battery assembly 6 and, in addition, also the electrical power PG generated by the electric generator 4 to power the electric motors 10. In this way, it is possible to perform a "special" start at the maximum acceleration of the series hybrid vehicle 2.

In an eighth operating condition, the vehicle control unit 5 controls the energy management unit 7 in an energy recovery mode, in case the electric motors 10 operate in the generator condition. In this operating condition, the energy management unit 7 supplies the electrical charging power PRIC to the battery assembly 6 conveniently using the electrical motor powers PM generated by the electric motors 10 in the generator condition.

In a ninth operating condition, by operating a user command device which is not shown in the accompanying Figures, the vehicle control unit 5 selectively activates/deactivates the use of the internal combustion engine 3. In this operating condition, the internal combustion engine 3 can selectively be activated/deactivated by said user command device in a manual manner. In this way, by deactivating the use of the internal combustion engine 3, the series hybrid vehicle 2 becomes suited to circulate in limited traffic areas without limitations.

Finally, the invention can evidently be subjected to changes to the embodiments described herein, though without going beyond the scope of protection set forth in the appended claims.

### LIST OF THE REFERENCE NUMBERS AND OF THE ABBREVIATIONS OF THE FIGURES

- 1: control system
- 2: series hybrid vehicle
- 3: internal combustion engine
- 4: electric generator
- 5: vehicle control unit
- 6: battery assembly
- 7: energy management unit
- 8: axle
- 9: wheel
- 10: electric motor
- 11: electronic converter
- 12: synchronous rectifier stage
- 13: voltage regulator stage
- 14: power supply device
- 15: storage device
- 16: DC-DC electronic power converter
- 17: user command assembly
- 18: acceleration command member
- 19: braking command member
- 20: speed sensor
- PA: electrical supply power
- PM: electrical motor power
- PT: electrical traction power
- PG: additional generated electrical power
- PAC: electrical storage power
- PE: electrical socket

## Claims

1. Control system (1) of a series hybrid vehicle (2) comprising:
- a user command assembly (17) for providing an acceleration command to said series hybrid vehicle (2);
- a speed sensor (20) configured to detect a running speed of said series hybrid vehicle (2);
- an internal combustion engine (3), which has no transmission/connection mechanisms with the wheels (9) of said series hybrid vehicle (2);
- an electric generator (4), which is mechanically driven by the internal combustion engine (3) so as to provide a generated electrical power (PG);
- at least one electric motor (10) for driving one or more wheels (9) of said series hybrid vehicle (2);
- an energy management unit (7) configured to receive said generated electrical power (PG) and control an electrical traction power (PT) supplied to said electric motor (10); and
- a vehicle control unit (5), which is configured to:
control the torque of the internal combustion engine (3) as a function of the actuation of the user command assembly (17) and the detected running speed in such a way as to generate a sound effect comparable to the sound effect of an internal combustion engine vehicle provided with a mechanical transmission having a plurality of gear ratios,
control through said energy management unit (7) the electrical traction power (PT) supplied to the electric motor (10) as a function of the actuation of the user command assembly (17) and the detected running speed, so as to generate traction dynamics comparable to the traction dynamics of an internal combustion engine vehicle provided with a mechanical transmission having a plurality of gear ratios, and
**characterized by** the fact that said vehicle control unit (5) is also configured to
adjust through the energy management unit (7) the electrical traction power (PT) supplied to the electric motor (10) so as to simulate the traction dynamics of a change of gear ratio.

2. The control system as claimed in claim 1, wherein said generated sound effect and said generated traction dynamics are comparable to the sound effect and to the traction dynamics of an internal combustion engine vehicle provided with a mechanical transmission having a robotized type gearbox or a manual type gearbox or an automatic type gearbox.

3. The control system as claimed in claim 1 or 2, wherein the vehicle control unit (5) is configured to control the electric generator (4) so as to provide an adjustable contrasting torque to counteract the torque of the internal combustion engine (3).

4. The control system as claimed in claim 3, wherein the vehicle control unit (5) is configured to adjust the contrasting torque of the electric generator (4) so as to generate a sound effect comparable to the sound effect of a change of gear ratio.

5. The system as claimed in any one of the foregoing claims, wherein the vehicle control unit (5) is configured to control the torque of the internal combustion engine (3) as a function of the electrical traction power (PT) supplied to the electric motor (10).

6. The system as claimed in any one of the foregoing claims, and comprising a battery assembly (6) suitable for providing an electrical storage power (PAC); the energy management unit (7) being configured to receive said electrical storage power (PAC) and to control the electrical traction power (PT) supplied to said electric motor (10) as a function of the generated electrical power (PG) received and the electrical storage power (PAC) received.

7. The control system as claimed in any one of the foregoing claims, wherein the vehicle control unit (5) is configured to cooperate with the energy management unit (7) in such a way as to control the electrical traction power (PT) supplied to the electric motors (10) as a function of the electrical storage power (PAC) and the generated electrical power (PG) available as input to the energy management unit (7).

8. The control system as claimed in any one of the foregoing claims, wherein the vehicle control unit (5) is configured to control the generated electrical power (PG) through the electric generator (4).

9. The control system as claimed in any one of the foregoing claims, and comprising an electronic power converter (11), which is connected to the electric motor (10) and is configured to receive the electrical traction power (PT) from the energy management unit (7).

10. The control system as claimed in any one of the foregoing claims, and comprising a plurality of electric motors (10) for the traction of respective wheels (9).

11. A control method of a series hybrid vehicle (2) comprising:
- an internal combustion engine (3), which has no transmission/connection mechanisms with the wheels (9) of said series hybrid vehicle (2);
- an electric generator (4), which is mechanically driven by the internal combustion engine (3) so as to provide a generated electrical power (PG); and
- at least one electric motor (10) for driving one or more wheels (9) of said series hybrid vehicle (2);
the method comprising the steps of:
- providing an acceleration command to said series hybrid vehicle (2);
- detecting a running speed of said series hybrid vehicle (2);
- receiving the generated electrical power (PG) and controlling an electric traction power (PT) supplied to said electric motor (10) by means of an energy management unit (7) ;
- controlling the torque of the internal combustion engine (3) as a function of the provided acceleration command and the detected running speed in such a way as to generate a sound effect comparable to the sound effect of an internal combustion engine vehicle provided with a mechanical transmission having a plurality of gear ratios;
- controlling the electrical traction power (PT) supplied to the electric motor (10) as a function of the provided acceleration command and the detected running speed, so as to generate a traction dynamics comparable to the traction dynamics of an internal combustion engine vehicle provided with a mechanical transmission having a plurality of gear ratios,
the method is **characterized by** comprising the step of:
- adjusting the electrical traction power (PT) supplied to the electric motor (10) so as to simulate the traction dynamics of a change of gear ratio.

12. The control method as claimed in claim 11, wherein said generated sound effect and said generated traction dynamics are comparable to the sound effect and the traction dynamics of an internal combustion engine vehicle provided with a mechanical transmission having a robotized type gearbox or a manual type gearbox or an automatic type gearbox.

13. The control method as claimed in claim 11 or 12, and comprising the step of controlling the electric generator (4) so as to provide an adjustable contrasting torque to counteract the torque of the internal combustion engine (3).

14. The control method as claimed in claim 13, and comprising the step of adjusting the contrasting torque of the electric generator (4) so as to generate a sound effect comparable to the sound effect of a change of gear ratio.

15. The control method as claimed in any one of claims 11 to 14, and comprising the step of controlling the torque of the internal combustion engine (3) as a function of the electrical traction power (PT) supplied to the electric motor (10) .

16. A computer program configured to control a series hybrid vehicle (2) and directly loadable into a memory of the vehicle control unit (5) to carry out the method steps of any one of claims 11 to 15 when the program is implemented by the vehicle control unit (5).

17. A program product comprising a readable medium on which the program of claim 16 is stored.

## Patentansprüche

1. Steuer- bzw. Regelsystem (1) eines Serienhybridfahrzeugs (2), umfassend:
- eine Benutzerbefehlsanordnung (17) zum Bereitstellen eines Beschleunigungsbefehls an das Serienhybridfahrzeug (2);
- einen Geschwindigkeitssensor (20), der konfiguriert ist, eine Fahrgeschwindigkeit des Serienhybridfahrzeugs (2) zu erfassen;
- einen Verbrennungsmotor (3), der keine Übertragungs-/Verbindungsmechanismen mit den Rädern (9) des Serienhybridfahrzeugs (2) aufweist,
- einen elektrischen Generator (4), der von dem Verbrennungsmotor (3) mechanisch angetrieben wird, um eine erzeugte elektrische Leistung (PG) bereitzustellen;
- zumindest einen Elektromotor (10) zum Antreiben eines oder mehrerer Räder (9) des Serienhybridfahrzeugs (2);
- eine Energiemanagementeinheit (7), die konfiguriert ist, die erzeugte elektrische Leistung (PG) zu empfangen und eine elektrische Traktionsleistung (PT), die dem Elektromotor (10) zugeführt wird, zu steuern bzw. zu regeln; und
- eine Fahrzeugsteuer- bzw. -regeleinheit (5), die konfiguriert ist zum:
Steuern bzw. Regeln des Drehmoments des Verbrennungsmotors (3) als eine Funktion der Betätigung der Benutzerbefehlsanordnung (17) und der erfassten Fahrgeschwindigkeit so, dass ein Geräuscheffekt erzeugt wird,
der mit dem Geräuscheffekt eines Fahrzeugs mit Verbrennungsmotor vergleichbar ist, das mit einem mechanischen Getriebe versehen ist, das eine Mehrzahl von Übersetzungsverhältnissen aufweist,
Steuern bzw. Regeln, durch die Energiemanagementeinheit (7), der dem Elektromotor (10) zugeführten elektrischen Traktionsleistung (PT) als eine Funktion der Betätigung der Benutzerbefehlsanordnung (17) und der erfassten Fahrgeschwindigkeit, um eine Traktionsdynamik zu erzeugen, die mit der Traktionsdynamik eines Fahrzeugs mit Verbrennungsmotor vergleichbar ist, das mit einem mechanischen Getriebe versehen ist, das eine Mehrzahl von Übersetzungsverhältnissen aufweist, und
**dadurch gekennzeichnet, dass** die Fahrzeugsteuer- bzw. -regeleinheit (5) auch konfiguriert ist zum:
Einstellen, durch die Energiemanagementeinheit (7), der dem Elektromotor (10) zugeführten elektrischen Traktionsleistung (PT), um die Traktionsdynamik einer Änderung des Übersetzungsverhältnisses zu simulieren.

2. Steuer- bzw. Regelsystem nach Anspruch 1, wobei der erzeugte Geräuscheffekt und die erzeugte Traktionsdynamik mit dem Geräuscheffekt und der Traktionsdynamik eines Fahrzeugs mit Verbrennungsmotor vergleichbar sind, das mit einem mechanischen Getriebe versehen ist, das ein robotisiertes Getriebe oder ein manuelles Getriebe oder ein automatisches Getriebe aufweist.

3. Steuer- bzw. Regelsystem nach Anspruch 1 oder 2, wobei die Fahrzeugsteuer- bzw. -regeleinheit (5) konfiguriert ist, den elektrischen Generator (4) so zu steuern bzw. zu regeln, dass er ein einstellbares gegensätzliches Drehmoment bzw. Gegendrehmoment bereitstellt, um dem Drehmoment des Verbrennungsmotors (3) entgegenzuwirken.

4. Steuer- bzw. Regelsystem nach Anspruch 3, wobei die Fahrzeugsteuer- bzw. -regeleinheit (5) konfiguriert ist, das Gegendrehmoment des elektrischen Generators (4) so einzustellen, dass ein Geräuscheffekt erzeugt wird, der mit dem Geräuscheffekt einer Änderung eines Übersetzungsverhältnisses vergleichbar ist.

5. System nach einem der vorhergehenden Ansprüche, wobei die Fahrzeugsteuer- bzw. -regeleinheit (5) konfiguriert ist, das Drehmoment des Verbrennungsmotors (3) als eine Funktion der dem Elektromotor (10) zugeführten elektrischen Traktionsleistung (PT) zu steuern bzw. zu regeln.

6. System nach einem der vorhergehenden Ansprüche und umfassend eine Batterieanordnung (6), die zum Bereitstellen einer elektrischen Speicherleistung (PAC) geeignet ist, wobei die Energiemanagementeinheit (7) konfiguriert ist, die elektrische Speicherleistung (PAC) zu empfangen und die dem Elektromotor (10) zugeführte elektrische Traktionsleistung (PT) als eine Funktion der empfangenen erzeugten elektrischen Leistung (PG) und der empfangenen elektrischen Speicherleistung (PAC) zu steuern bzw. zu regeln.

7. Steuer- bzw. Regelsystem nach einem der vorhergehenden Ansprüche, wobei die Fahrzeugsteuer- bzw. -regeleinheit (5) konfiguriert ist, mit der Energiemanagementeinheit (7) derart zusammenzuwirken, dass sie die den Elektromotoren (10) zugeführte elektrische Traktionsleistung (PT) als eine Funktion der elektrischen Speicherleistung (PAC) und der erzeugten elektrischen Leistung (PG), die als Eingabe für die Energiemanagementeinheit (7) verfügbar sind, steuert bzw. regelt.

8. Steuer- bzw. Regelsystem nach einem der vorhergehenden Ansprüche, wobei die Fahrzeugsteuereinheit (5) konfiguriert ist, die erzeugte elektrische Leistung (PG) durch den elektrischen Generator (4) zu steuern bzw. zu regeln.

9. Steuer- bzw. Regelsystem nach einem der vorhergehenden Ansprüche und umfassend einen elektronischen Leistungswandler (11), der mit dem Elektromotor (10) verbunden ist und konfiguriert ist, die elektrische Traktionsleistung (PT) von der Energiemanagementeinheit (7) zu empfangen.

10. Steuer- bzw. Regelsystem nach einem der vorhergehenden Ansprüche und umfassend eine Mehrzahl von Elektromotoren (10) für die Traktion jeweiliger Räder (9).

11. Steuer- bzw. Regelverfahren eines Serienhybridfahrzeugs (2), umfassend:
- einen Verbrennungsmotor (3), der keine Übertragungs-/Verbindungsmechanismen mit den Rädern (9) des Serienhybridfahrzeugs (2) aufweist,
- einen elektrischen Generator (4), der von dem Verbrennungsmotor (3) mechanisch angetrieben wird, um eine erzeugte elektrische Leistung (PG) bereitzustellen;
- zumindest einen Elektromotor (10) zum Antreiben eines oder mehrerer Räder (9) des Serienhybridfahrzeugs (2);
wobei das Verfahren die Schritte umfasst:
- Bereitstellen eines Beschleunigungsbefehls an das Serienhybridfahrzeug (2);
- Erfassen einer Fahrgeschwindigkeit des Serienhybridfahrzeugs (2);
- Empfangen der erzeugten elektrischen Leistung (PG) und Steuern bzw. Regeln einer dem Elektromotor (10) zugeführten elektrischen Traktionsleistung (PT) mittels einer Energiemanagementeinheit (7);
- Steuern bzw. Regeln des Drehmoments des Drehmoments des Verbrennungsmotors (3) als eine Funktion des bereitgestellten Beschleunigungsbefehls und der erfassten Fahrgeschwindigkeit so, dass ein Geräuscheffekt erzeugt wird, der mit dem Geräuscheffekt eines Fahrzeugs mit Verbrennungsmotor vergleichbar ist, das mit einem mechanischen Getriebe versehen ist, das eine Mehrzahl von Übersetzungsverhältnissen aufweist,
- Steuern bzw. Regeln der dem Elektromotor (10) zugeführten elektrischen Traktionsleistung (PT) als eine Funktion des bereitgestellten Beschleunigungsbefehls und der erfassten Fahrgeschwindigkeit, um eine Traktionsdynamik zu erzeugen, die mit der Traktionsdynamik eines Fahrzeugs mit Verbrennungsmotor vergleichbar ist, das mit einem mechanischen Getriebe versehen ist, das eine Mehrzahl von Übersetzungsverhältnissen aufweist,
wobei das Verfahren **dadurch gekennzeichnet ist, dass** es den Schritt umfasst:
- Einstellen der dem Elektromotor (10) zugeführten elektrischen Traktionsleistung (PT), um die Traktionsdynamik einer Änderung des Übersetzungsverhältnisses zu simulieren.

12. Steuer- bzw. Regelverfahren nach Anspruch 11, wobei der erzeugte Geräuscheffekt und die erzeugte Traktionsdynamik mit dem Geräuscheffekt und der Traktionsdynamik eines Fahrzeugs mit Verbrennungsmotor vergleichbar sind, das mit einem mechanischen Getriebe versehen ist, das ein robotisiertes Getriebe oder ein manuelles Getriebe oder ein automatisches Getriebe aufweist.

13. Steuer- bzw. Regelverfahren nach Anspruch 11 oder 12 und umfassend den Schritt des Steuerns bzw. Regeln des elektrischen Generators (4) dahingehend, ein einstellbares gegensätzliches Drehmoment bzw. Gegendrehmoment bereitzustellen, um dem Drehmoment des Verbrennungsmotors (3) entgegenzuwirken.

14. Steuer- bzw. Regelverfahren nach Anspruch 13 und umfassend den Schritt des Einstellens des Gegendrehmoments des elektrischen Generators (4), um einen Geräuscheffekt zu erzeugen, der mit dem Geräuscheffekt einer Änderung eines Übersetzungsverhältnisses vergleichbar ist.

15. Steuer- bzw. Regelverfahren nach einem der Ansprüche 11 bis 14 und umfassend den Schritt des Steuerns bzw. Regeln des Drehmoments des Verbrennungsmotors (3) als eine Funktion der dem Elektromotor (10) zugeführten elektrischen Traktionsleistung (PT).

16. Computerprogramm, das konfiguriert ist, ein Serienhybridfahrzeug (2) zu steuern bzw. zu regeln und direkt in einen Speicher der Fahrzeugsteuer- bzw. -regeleinheit (5) ladbar ist, um die Verfahrensschritte nach einem der Ansprüche 11 bis 15 auszuführen, wenn das Programm durch die Fahrzeugsteuer- bzw. -regeleinheit (5) implementiert wird.

17. Programmprodukt, umfassend ein lesbares Medium, auf dem das Programm nach Anspruch 16 gespeichert ist.

## Revendications

1. Système de commande (1) d'un véhicule hybride à configuration en série (2) comprenant :
- un ensemble d'instruction utilisateur (17) pour fournir une instruction d'accélération audit véhicule hybride à configuration en série (2) ;
- un capteur de vitesse (20) configuré pour détecter une vitesse de déplacement dudit véhicule hybride à configuration en série (2) ;
- un moteur à combustion interne (3), qui n'a pas de mécanismes de transmission/connexion avec les roues (9) dudit véhicule hybride à configuration en série (2) ;
- un générateur électrique (4), qui est entraîné mécaniquement par le moteur à combustion interne (3) de manière à fournir une puissance électrique générée (PG) ;
- au moins un moteur électrique (10) pour entraîner une ou plusieurs roues (9) dudit véhicule hybride à configuration en série (2) ;
- une unité de gestion d'énergie (7) configurée pour recevoir ladite puissance électrique générée (PG) et commander une puissance de traction électrique (PT) fournie audit moteur électrique (10) ; et
- une unité de commande de véhicule (5), qui est configurée pour :
commander le couple du moteur à combustion interne (3) en fonction de l'actionnement de l'ensemble d'instruction utilisateur (17) et de la vitesse de déplacement détectée, de manière à générer un effet sonore comparable à l'effet sonore d'un véhicule à moteur à combustion interne muni d'une transmission mécanique ayant une pluralité de rapports de vitesse,
commander, par l'intermédiaire de ladite unité de gestion d'énergie (7), la puissance de traction électrique (PT) fournie au moteur électrique (10) en fonction de l'actionnement de l'ensemble d'instruction utilisateur (17) et de la vitesse de déplacement détectée, de manière à générer une dynamique de traction comparable à la dynamique de traction d'un véhicule à moteur à combustion interne muni d'une transmission mécanique ayant une pluralité de rapports de vitesse, et
**caractérisé par le fait que** ladite unité de commande de véhicule (5) est également configurée pour
régler, par l'intermédiaire de l'unité de gestion d'énergie (7), la puissance de traction électrique (PT) fournie au moteur électrique (10) de manière à simuler la dynamique de traction d'un changement de rapport de vitesse.

2. Système de commande selon la revendication 1, dans lequel ledit effet sonore généré et ladite dynamique de traction générée sont comparables à l'effet sonore et à la dynamique de traction d'un véhicule à moteur à combustion interne muni d'une transmission mécanique ayant une boîte de vitesses de type robotisé, une boîte de vitesses de type manuel ou une boîte de vitesses de type automatique.

3. Système de commande selon la revendication 1 ou 2, dans lequel l'unité de commande de véhicule (5) est configurée pour commander le générateur électrique (4) de manière à fournir un couple contrasté réglable pour contrecarrer le couple du moteur à combustion interne (3).

4. Système de commande selon la revendication 3, dans lequel l'unité de commande de véhicule (5) est configurée pour régler le couple contrasté du générateur électrique (4) de manière à générer un effet sonore comparable à l'effet sonore d'un changement de rapport de vitesse.

5. Système selon l'une quelconque des revendications précédentes, dans lequel l'unité de commande de véhicule (5) est configurée pour commander le couple du moteur à combustion interne (3) en fonction de la puissance de traction électrique (PT) fournie au moteur électrique (10).

6. Système selon l'une quelconque des revendications précédentes, et comprenant un ensemble batterie (6) adapté pour fournir une puissance de stockage électrique (PAC) ; l'unité de gestion d'énergie (7) étant configurée pour recevoir ladite puissance de stockage électrique (PAC) et pour commander la puissance de traction électrique (PT) fournie audit moteur électrique (10) en fonction de la puissance électrique générée (PG) reçue et de la puissance de stockage électrique (PAC) reçue.

7. Système de commande selon l'une quelconque des revendications précédentes, dans lequel l'unité de commande de véhicule (5) est configurée pour coopérer avec l'unité de gestion d'énergie (7) de manière à commander la puissance de traction électrique (PT) fournie au moteurs électriques (10) en fonction de la puissance de stockage électrique (PAC) et de la puissance électrique générée (PG) disponibles en entrée de l'unité de gestion d'énergie (7).

8. Système de commande selon l'une quelconque des revendications précédentes, dans lequel l'unité de commande de véhicule (5) est configurée pour commander la puissance électrique générée (PG) par l'intermédiaire du générateur électrique (4).

9. Système de commande selon l'une quelconque des revendications précédentes, et comprenant un convertisseur de puissance électronique (11), qui est connecté au moteur électrique (10) et configuré pour recevoir la puissance de traction électrique (PT) de l'unité de gestion d'énergie (7).

10. Système de commande selon l'une quelconque des revendications précédentes, et comprenant une pluralité de moteurs électriques (10) pour la traction de roues (9) respectives.

11. Procédé de commande d'un véhicule hybride à configuration en série (2) comprenant :
- un moteur à combustion interne (3), qui n'a pas de mécanismes de transmission/connexion avec les roues (9) dudit véhicule hybride à configuration en série (2) ;
- un générateur électrique (4), qui est entraîné mécaniquement par le moteur à combustion interne (3) de manière à fournir une puissance électrique générée (PG) ; et
- au moins un moteur électrique (10) pour entraîner une ou plusieurs roues (9) dudit véhicule hybride à configuration en série (2) ;
le procédé comprenant les étapes :
- de fourniture d'une instruction d'accélération audit véhicule hybride à configuration en série (2) ;
- de détection d'une vitesse de déplacement dudit véhicule hybride à configuration en série (2) ;
- de réception de la puissance électrique générée (PG), et de commande d'une puissance de traction électrique (PT) fournie audit moteur électrique (10) au moyen d'une unité de gestion d'énergie (7) ;
- de commande du couple du moteur à combustion interne (3) en fonction de l'instruction d'accélération fournie et de la vitesse de déplacement détectée, de manière à générer un effet sonore comparable à l'effet sonore d'un véhicule à moteur à combustion interne muni d'une transmission mécanique ayant une pluralité de rapports de vitesse ;
- de commande de la puissance de traction électrique (PT) fournie au moteur électrique (10) en fonction de l'instruction d'accélération fournie et de la vitesse de déplacement détectée, de manière à générer une dynamique de traction comparable à la dynamique de traction d'un véhicule à moteur à combustion interne muni d'une transmission mécanique ayant une pluralité de rapports de vitesse,
le procédé est **caractérisé en ce qu'**il comprend l'étape :
- de réglage de la puissance de traction électrique (PT) fournie au moteur électrique (10) de manière à simuler la dynamique de traction d'un changement de rapport de vitesse.

12. Procédé de commande selon la revendication 11, dans lequel ledit effet sonore généré et ladite dynamique de traction générée sont comparables à l'effet sonore et à la dynamique de traction d'un véhicule à moteur à combustion interne muni d'une transmission mécanique ayant une boîte de vitesses de type robotisé, une boîte de vitesses de type manuel ou une boîte de vitesses de type automatique.

13. Procédé de commande selon la revendication 11 ou 12, et comprenant l'étape de commande du générateur électrique (4) de manière à fournir un couple contrasté réglable pour contrecarrer le couple du moteur à combustion interne (3).

14. Procédé de commande selon la revendication 13, et comprenant l'étape de réglage du couple contrasté du générateur électrique (4) de manière à générer un effet sonore comparable à l'effet sonore d'un changement de rapport de vitesse.

15. Procédé de commande selon l'une quelconque des revendications 11 à 14, et comprenant l'étape de commande du couple du moteur à combustion interne (3) en fonction de la puissance de traction électrique (PT) fournie au moteur électrique (10).

16. Programme informatique configuré pour commander un véhicule hybride à configuration en série (2) et pouvant être chargé directement dans une mémoire de l'unité de commande de véhicule (5) pour effectuer les étapes du procédé de l'une quelconque des revendications 11 à 15 lorsque le programme est mis en œuvre par l'unité de commande de véhicule (5).

17. Produit de programme comprenant un support lisible sur lequel le programme de la revendication 16 est stocké.
